# EUROPEAN PATENT APPLICATION

(11) **EP 4 467 263 A1**
(43) Date of publication of application: **27.11.2024**
(21) Application number: 23175465.6
(22) Date of filing: 25.05.2023
(51) Int. Cl.: B22F 10/22, B22F 10/38, B22F 10/50, B33Y 10/00, B33Y 80/00, B22F 10/36, C22C 1/10, B22F 7/02, B22F 7/06, B22F 3/11

(54) **METHOD OF MANUFACTURING A MULTILAYER STRUCTURE FROM A METAL POWDER BY MEANS OF POWDER BED BASED MELTING**

(71) Applicant: MAHLE International GmbH, 70376 Stuttgart (DE)
(72) Inventor: Cronin, Harry Michael, Cambridge, CB1 3DE (GB); Killinger, Tim, 70180 Stuttgart (DE); Kohl, Michael, 74321 Bietigheim-Bissingen (DE); Papke, Chris Andre, 70180 Stuttgart (DE); Pastor, Alejandro Halpern, Trumpington, GB CB2 9EU (GB); Viehrig, Falk, 70376 Stuttgart (DE); Walter, Christoph, 70469 Stuttgart (DE); Wanke, Robin, 46530 Puzol (ES); Wright, Christopher John, London, E15 4AD (GB)
(74) Representative: BRP Renaud & Partner mbB Rechtsanwälte Patentanwälte Steuerberater

(57) **Abstract**

The invention relates to a method for producing a multilayer structure (1) from a metal powder by means of powder bed-based melting,
- according to which the multilayer structure (1) is produced from a metal powder by means of powder bed-based melting, wherein during the powder bed-based melting at least one production or/and process parameter influencing the melting process is varied in such a way that in the multilayer structure (1) at least one electrically conductive conduction zone (2) of at least one metal and furthermore at least one dielectric zone (3) of at least one metal oxide and furthermore at least one resistive zone are produced,
- wherein the variation of the at least one manufacturing or process parameter is also carried out in such a way that the at least one resistive zone (4) formed has at least one subzone in which it is formed by a mixture of the metal and the metal oxide or/and the at least one resistive zone (4) formed has at least two, preferably more, metallic subzones of the metal and the metal oxide, metal subzones (4c) in which it is formed by a mixture of the metal and the metal oxide or/and the at least one resistive zone (4) formed has at least two, preferably a plurality of, metal subzones (4a) made of the metal and at least two, preferably a plurality of, metal oxide subzones (4b) made of the metal oxide, the at least two metal subzones (4a) and the at least two metal oxide subzones (4b) being arranged alternately next to one another.

## Description

The present invention relates to a method for producing a multilayer structure from a metal powder by means of powder bed-based melting. The invention further relates to a multilayer structure for a monolithic heater, which is preferably produced by means of this method.

The production of single-piece multilayer structures by means of powder bed-based melting is known. Powder bed based melting is an additive manufacturing technique, with which 3D metal or metal alloy structures can be produced from a powdery metallic starting material. For this purpose, a laser or electron beam is directed onto a thin layer of metallic powder - in particular an aluminum powder - causing it to melt and grow together into a layer by subsequent crystallization. A multilayer structure is formed by the iterative application of further layers of metal powder and the associated melting/welding of the powder at the desired locations. With the aid of the energy contained in the laser or electron beam, it is possible not only to form a solid and electrically conductive metal from the metal powder, in particular in the form of a metal layer, but also to oxidize the metal powder so that an electrically insulating metal oxide is formed. This makes it possible to combine electrically conductive zones with electrically insulating zones in the multilayer structure formed. In particular, this allows electrical conduction paths to be realized in accordance with a predetermined geometry.

It is an object of the present invention to show new ways in the further development of methods for the production of the multilayer structures described above by means of powder bed-based melting.

This object is solved by the objects of the independent patent claims. Preferred embodiments are the subject of the dependent patent claims.

Accordingly, the basic idea of the invention is to oxidize a metal powder of a metal or of a metal alloy by means of powder bed-based melting not completely, but only partially, so that it has neither the electrical properties of an electrical conductor nor of an electrical insulator, but behaves like an electrical resistor, in particular an ohmic resistor. In the present context, this is to be understood as meaning that the specific electrical resistance of the material solidified after melting is greater than that of an - in particular ideal - electrical conductor and less than that of an - in particular ideal - electrical insulator. In particular, the value of the specific resistivity is considered to be > 0 and < ∞. This makes it possible to electrically energize the multilayer structure formed after solidification of the molten metal powder in the partially oxidized region in such a way that it acts as a heating resistor: due to the electrical resistance present, electrical energy is converted into heat when flowing through the partially oxidized region, which can be dissipated to the outside and thus used as heating heat.

Since the design of the, particularly single-piece, multilayer structure with at least one partially oxidized zone presented here can be combined with the formation of electrically conductive and electrically insulating zones mentioned at the beginning, a wide range of new design and application options, particularly in the technical field of electrical heating devices, arise in the design of the multilayer structure produced by powder bed-based melting.

In the sense of the invention, "partial oxidation" means that the partially oxidized zone is composed of oxidized subzones and non-oxidized subzones which are arranged next to each other, preferably alternately next to each other, and together form the partially oxidized zone. If the starting material is a metal powder of a single metal, for example aluminum, the non-oxidized subzones are formed by the metal and the oxidized subzones are formed by the metal oxide of that metal. If the material of the metal powder is a metal alloy of a first metal and a one second metal, the non-oxidized subzones may be formed by the first metal and the oxidized subzones may be formed by the metal oxide of the second metal.

The method according to the present invention is used to produce a multilayer structure by means of powder bed-based melting, i.e. by means of an additive manufacturing method. For this purpose, a laser or electron beam is directed onto a thin layer of a metallic powder - hereinafter also abbreviated to "metal powder" - whereby it melts and grows together to form a layer. The material of the metallic powder can be a metal, but also a metal alloy. A multi-layer structure is formed by iteratively applying further layers of metallic powder and consequently melting/welding the powder at the desired locations. By varying at least one process or production parameter during powder bed melting, the metallic starting material can be locally oxidized.

Particularly preferred is the powder bed-based melting method used here, which is a laser beam or electron beam powder bed melting method. As an alternative to powder bed-based melting, however, it is also conceivable to produce the multi-layer structure by direct laser sintering of metals, selective heat sintering, selective laser sintering and targeted energy deposition.
fabrication.

According to the invention, it is therefore proposed to vary said at least one process or manufacturing parameter influencing the melting process during the execution of the powder bed based melting in such a way that in the multilayer structure at least one electrically conductive zone of at least one metal and further at least one dielectric zone of at least one metal oxide and further at least one resistive zone is formed from a metal powder. That is, the multilayer produced comprises at least one electrically conductive zone of at least one metal and further at least one dielectric zone of at least one metal oxide and further at least one resistive zone.

According to the invention, the variation of the at least one manufacturing or process parameter is also carried out in such a way that the resulting at least one resistive zone comprises at least one subzone in which it is formed by a mixture of the metal and the metal oxide. Alternatively, or in addition thereto, the at least one resistive zone comprises at least two, preferably multiple, metallic subzones of the metal and at least two, preferably multiple, metal oxide subzones of the metal oxide, wherein the at least two metallic subzones and the at least two metal oxide subzones are arranged alternately side by side.

In a preferred embodiment, the resistivity of at least one resistive zone is greater than the resistivity of at least one electrically conductive zone and is less than the resistivity of at least one dielectric zone.

Alternatively, or additionally, the resistance value of at least one resistive zone may be between 10mΩ and 1kΩ, preferably between 1Ω and 100Ω. The according resistivity can be calculated with the formula R = ρ *l / A, wherein R is the resistance, ρ the resistivity, I the length of the resistive area and A the cross section area of the resistive area.

Since the value of the resistivity may vary within the volume of the resistive zone due to the composition of the resistive zone from metallic and metal-oxide sub-zones, in the present the term "resistivity" always refers to the average value calculated over the entire volume of a single resistive zone - i.e. the average resistivity, which is abbreviated as "resistivity" in the following. In any case, the value of the (average) resistivity of the resistive zone is > 0 and < ∞.

In a preferred embodiment of the method according to the invention, the multilayer structure is produced by successive melting and solidification of a plurality of individual layers arranged one after the other, the at least one process or production parameter being varied during the melting of at least one individual layer, preferably of a plurality of individual layers.

In a preferred embodiment of the method according to the invention the multilayer structure is produced from a reservoir of a metal powder during the powder bed-based melting. in the course of this additive manufacturing method, a light beam, in particular of laser light, or an electron beam, is scanned along a scan path over a surface of the metal powder. Particularly preferably, for the production of the at least one conductive zone , the at least one dielectric zone and the at least one resistive zone, at least one of the following production parameters can be varied during the production or during the powder bed based melting: - the beam intensity of the light or electron beam; - the speed with which the light beam or electron beam is guided over the surface;- a matrix thickness which the metal powder of a respective individual layer has before melting.

Particularly expediently, at least the energy density of the light or electron beam can be varied during the movement over the metal powder in order to generate the at least one resistive zone. This allows the metal powder irradiated in the light or electron beam to be locally partially oxidized, giving it the desired properties of the resistive zone. In this context, "partially oxidized" means that the resistive zone is divided into subzones in which it is either metallic, i.e. electrically conductive, or metal-oxidized, i.e. oxidized and thus electrically insulating.

If the metal powder is formed from two or more powdery metals or alloys, at least two of which can be selectively oxidized, it is conceivable to select said manufacturing parameter(s) in such a way that certain oxidizable metals/alloys of the metal powder are oxidized, but not others.

Particularly preferably, for the generation of the at least one resistive zone, al-so at least one manufacturing parameter is set or/and varied in such a way that the metal powder is partially oxidized in the region of the resistive zone to be generated. In this way, it is achieved that the resistive zone has the desired resistivity.

According to an advantageous further development of the method according to the invention for partial oxidation, at least one production parameter is set so that a value of the energy deposition density set in the metal powder lies between a lower limit value, which is required to melt the metal powder without oxidizing it, and an upper limit value, which is required to oxidize the metal powder.

In a further preferred embodiment, in order to produce zonally or/and locally different electrical or/and thermal properties in the multilayer structure, a volume fraction of the metal powder which is oxidized in the course of the additive manufacturing can be varied.

The invention further relates to a, preferably single-piece, multilayer structure for a monolithic heating device. Preferably, the multilayer structure according to the invention is manufactured by means of the method according to the invention presented above. In this case, the advantages of the method according to the invention explained above are transferred to the multilayer structure according to the invention The multilayer structure comprises at least one electrically conductive conduction zone of at least one metal and further comprises and at least one dielectric zone of at least one metal oxide. Furthermore, the multilayer structure comprises at least one resistive zone in which metal is partially oxidized.

In a preferred embodiment, the partially oxidized resistive zone comprises or consists of a mixture of metal and metal oxide. The electrical resistivity as a material constant for the metal and metal oxide material forming the resistive zone can be varied and adjusted by changing the ratio of metal to metal oxide in the mixture: The greater the proportion of metal in the mixture, the lower the electrical resistivity.

In another preferred embodiment, the partially oxidized resistive zone comprises at least two, preferably more, metallic subzones of the metal and at least two, preferably more, metal oxide subzones, of the metal oxide. In this embodiment, the at least two metallic sub-zones and the at least two metal-oxide sub-zones are particularly preferably arranged alternately next to each other in succession. By means of the existing metallic and metal-oxide subzones, the partial oxidation characterizing the resistive zone is realized.

According to an advantageous further development, the multilayer structure comprises at least two individual layers arranged one on top of the other and firmly connected to one another. In this further development, at least one of the at least one electrically conductive zone or and at least one of the at least one dielectric zone or/and at least one of the at least one resistive zone extends over exactly one individual layer or over at least two individual layers arranged next to one another.

In a preferred embodiment, in a given cross-section, at least one metallic or/and at least one metal oxide sub-zone may have a cross-sectional area between 1 µm² and 1 cm².

In another preferred embodiment, the at least one resistive zone comprises at least one, preferably at least two, metallic subzone(s) or/and at least one, preferably at least two, metal-oxide subzone(s). By varying and adjusting a ratio of the number of metallic subzones to the number of metal oxide subzones, the resistivity of the resistive zone can be varied or adjusted.

Particularly preferably, the at least one resistive zone may comprise at least two metallic subzones which are spatially electrically separated from each other by means of at least one metal oxide subzone.

In another preferred embodiment, the at least one resistive zone may be cluster-like with a plurality of, preferably alternating, metallic and metal oxide subzones arranged side by side.

In a further preferred embodiment, the multilayer structure comprises at least two individual layers arranged on top of one another and firmly bonded to one another. The multilayer structure is thus particularly preferably formed in one piece and can in particular consist of the firmly interconnected individual layers. In this embodiment, at least one of the at least one electrically conductive zone or and at least one of the at least one dielectric zone or/and at least one of the at least one resistive zone extends over exactly one individual layer or over at least two individual layers arranged next to one another.

In a preferred embodiment of the multilayer structure according to the invention, the at least two metallic subzones and the at least two metal-oxide subzones are each formed in layers and are preferably arranged alternately, particularly preferably, in succession along a stacking direction.

In a preferred embodiment, the resistivity of the multilayer structure is greater in the at least one resistive zone than in the at least one electrically conductive conduction zone and is also less than in the at least one dielectric zone. Alternatively, or additionally, in this embodiment the resistance of the multilayer structure in the at least one resistive zone may be between 10 mΩ and 1 kΩ, preferably between 1Ω and 100 Ω. The according resistivity can be calculated for the full multilayer stack with the following formula: R= ρ * I / A, wherein R is the resistance, ρ the resistivity, I the length of the resistive area and A the cross section area of the resistive area.

Finally, the invention relates to a monolithic heating device comprising a multilayer structure according to the invention presented above. Therefore, the advantages of the method according to the invention presented above also transfer to the heating device according to the invention.

Further important features and advantages of the invention will be apparent from the sub-claims, from the figures and from the accompanying figure description based on the drawings.

It is understood that the above-mentioned features and those still to be explained below can be used not only in the combination indicated in each case, but also in other combinations or in a stand-alone position, without leaving the scope of the present invention.

Preferred embodiments of the invention are shown in the figures and will be explained in more detail in the following description, whereby the same reference signs refer to identical or similar or functionally identical components.

The following are shown schematically:
- Fig. 1a: in highly simplified form a production plant for carrying out the method according to the invention,
- Fig. 1b: shows in greatly simplified form a multilayer structure produced by means of the production system of Fig. 1,
- Figs. 2a, 2b: each showing by way of example a possible structural configuration of a resistive zone of the layered structure according to the invention,
- Fig. 3: exemplifies a monolithic heater designed as a thick-film heater with a multilayer structure according to the invention,
- Fig. 4: a top view of the multilayer structure 1 of Fig. 3,
- Fig. 5: a perspective view of a further example of a monolithic heater designed to heat a coolant line through which a cooling fluid can flow,
- Fig. 6: the heating device of Fig. 5 in a longitudinal section.

The procedure of the method according to the invention is explained below by way of example. Accordingly, in a first step, a 3D model of the multilayer structure to be produced by means of the method according to the invention can be created with the aid of suitable computer software, defining the geometric position of the different zones. In particular, the 3D model can be used to determine in which areas of the multilayer structure to be manufactured an electrically conductive zone, dielectric zones and resistive zone are to be generated.

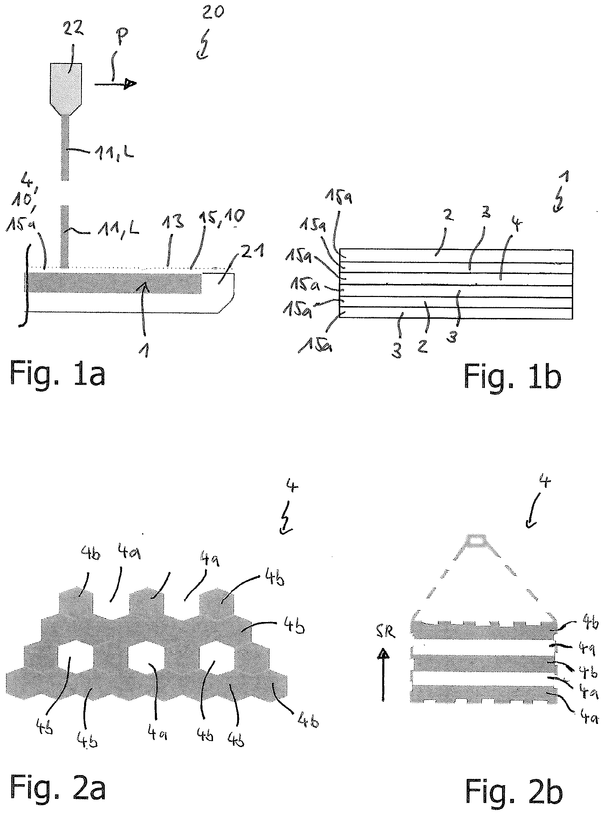

In a further measure, a software-supported conversion of the 3-D model into a set of instructions can be carried out, which can be used by a manufacturing system 20 shown in figure 1a to manufacture the multilayer structure 1. Figure 1a shows a highly simplified representation of the manufacturing system 20.

Then the actual powder bed-based melting takes place. The desired multilayer structure 1 is produced from the metal powder 10 by successive melting and solidification of several individual layers 15 arranged one after the other. For this purpose, a single layer 15 of the metal powder 10 is arranged in a receptacle 21. Optionally, the metal powder 10 can be pre-processed, for example by washing in an NaOH solution and by drying following the washing. After arranging the single layer 15 of the metal powder 10, a light beam 11 of laser light L generated by an adjustable (cf. arrow P in Figure 1a) laser light source 22 of the manufacturing system 20 is moved along a scan path 12 over a surface 13 of the metal powder 10 forming the single layer 15. By means of the energy contained in the laser light beam 11, the metal powder 10 is locally melted and solidifies after melting to form a solid single layer 15a of the single-piece multilayer structure 1 to be manufactured.

This process is repeated for the desired number of individual layers of the multi-layer structure 1 to be produced (not shown in Figure 1a). The multilayer structure 1 is thus produced by successive melting and solidification of several individual layers arranged one after the other. In the process, the successive individual layers 15a of the metal powder 10 are firmly bonded to one another, i.e. the resulting multilayer structure 1 is formed in one piece.

During the movement of the laser light source 22 over the receptacle 21 with the metal powder 10, i.e. during the processing of the individual layers 15, the process parameters influencing the melting process in the metal powder 10 are varied.

As a result, electrically conductive zones 2 of metal and dielectric zones 3 of metal oxide and resistive zones 4, in which the metal of the metal powder 10 is partially oxidized, are formed in the multilayer structure 1 produced according to the specifications of the 3D model - this is shown schematically in greatly simplified form in Figure 1b. The single layer 15 shown in Figure 1a can also form a resistive zone 4 if the process parameters are suitably selected. The partially oxidized resistive zones 4 thus each consist of a mixture of metal and metal oxide. If aluminum is used as the metal for the metal powder 10 (cf. Figure 1a), the metal is oxidized to aluminum oxide in the dielectric zones 3.

The conductive zones 2, the dielectric zones 3 and the resistive zones 4 can differ from each other in their specific electrical resistance. Process parameters that can be set or varied and thus influence the melting process in the metal powder 10 are, for example: a radiation intensity of the light beam when moving over the surface of the metal powder 10; a speed at which the light or electron beam is guided over the surface of the metal powder of a respective individual layer; a material thickness which the metal powder of a respective individual layer has before melting.

In order to achieve said partial oxidation of the metal powder 10, the manufacturing parameter involved during the scanning process can be adjusted such that a value of the energy deposition density set in the metal powder 10 is between a lower limit value required to melt the metal powder 10 without oxidizing it and an upper limit value required to oxidize the metal powder 10.

Figure 2a illustrates a possible structural configuration of a resistive zone 4 described above by means of the method according to the invention. For the purpose of partial oxidation of the metal powder 10 in the resistive zone 4, the adjustment or variation of said manufacturing or process parameters is carried out in such a way that the resistive zone 4 formed has a plurality metallic subzones 4a of the metal and a plurality of metal oxide subzones 4b, of the metal oxide. In this case, the metallic subzones 4a and the metal oxide subzones 4b can be arranged alternately next to each other. The larger the ratio of the number of metallic subzones 4a to the number of metal oxide subzones 4b, the smaller the value of the resistivity of the resistive zone 4 formed from these subzones 4a, 4b. The smaller the ratio of the number of metallic subzones 4a to the number of metal oxide subzones 4b, the larger the value of the resistivity of the resistive zone 4 formed from these subzones 4a, 4b.

For example, the resistive zone 4 may have two or more metallic subzones 4a and/or two or more metal oxide subzones 4b.

In the example scenario, the resistive zone 4 is clustered with a plurality of metallic and metal oxide subzones 4a, 4b arranged alternately side by side. As indicated in Figure 2a, the individual metallic subzones 4a can be electrically separated from one another by means of electrically insulating subzones 4b. The individual metallic and one metal oxide subzones 4a, 4b can each have a cross-sectional area of between 1 µm² and 1 cm² in a specific cross-section.

Figure 2b illustrates a further possible structural configuration of a resistive zone 4 described as above by means of the method according to the invention. Here, the metallic subzones 4a and the metal-oxide subzones 4b are each formed in layers and are stacked alternately along a stacking direction SR.

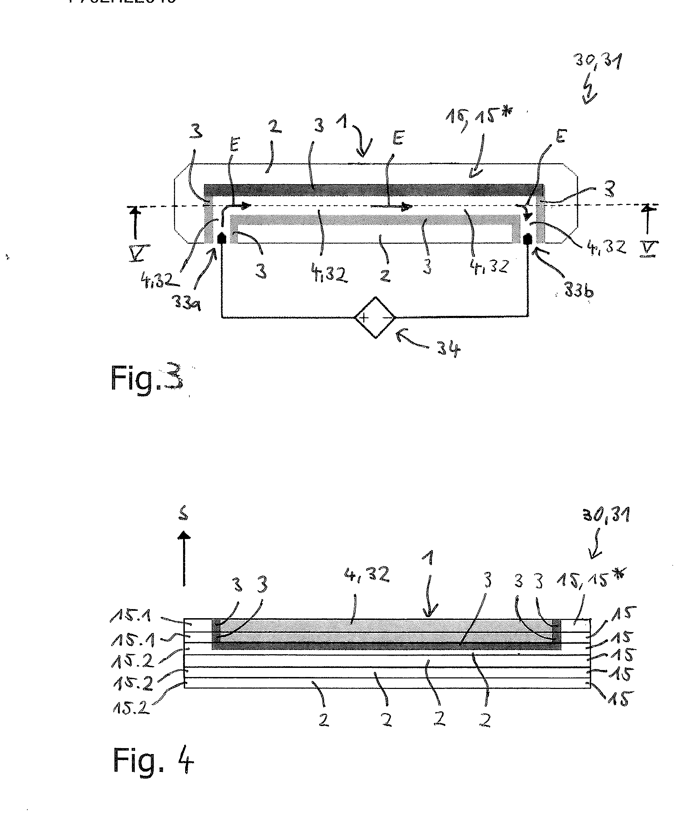

Figure 3 shows an example of a monolithic heater 30, which may be in the form of a thick-film heater 31, which comprises a multilayer structure 1 according to the invention, produced by means of the method according to the invention. Figure 3 shows a top view of an uppermost layer 15*, 15 of the multilayer structure 1.

The multilayer structure 1 comprises a longitudinal resistive zone 4 through which an electric current can flow. The resistive zone 4 thus forms an electrical conduction path 32 of the heater 30, which has an extension E extending from a first path end 33a to a second path end 33b. By applying an electrical voltage generated by an electrical voltage source 34 to the two path ends 33a, 33b, an electrical current flow can be generated through the conduction path 32, i.e. through the resistive zone 4. Due to the resistivity of resistive zone 4, electrical energy is dissipated in it and released as heat.

As Figure 3 shows, the resistive zone 4 forming the conduction path 32 can be bounded along its extension E on both sides by a dielectric, i.e. electrically nonconductive, zone 3. The two dielectric zones 3, 3 also extend along the extension E of the conductive path 32, so that the latter is sandwiched between the two dielectric zones 3, 3 in the top view shown. The area of the uppermost layer 15* complementary to the resistive zone 4 and the two dielectric zones 3 in the top view shown can thus be formed as an electrically conductive zone 2, since the resistive zone 4 acting as the conductive path 32 is electrically isolated from the electrically conductive zone 2 by means of the two dielectric zones 3. This simplifies and accelerates the fabrication of the multilayer structure 1, since during the fabrication of the multilayer structure 1 the metal powder 10 only has to be melted and re-solidified, but not oxidized.

Figure 4 shows a longitudinal section of the multilayer structure 1 of Figure 3 along the line of intersection V-V. Accordingly, the single-piece multilayer structure 1 has a plurality of individual layers 15 stacked on top of each other along a stacking direction S, including the layer 15* shown in Figure 3 and uppermost with respect to the stacking direction S. Some of the individual layers 15.1, 15 may be formed identically to the upper layer 15, 15* with respect to a lateral arrangement and formation of the conductive zones 2, the dielectric zones 3 and the dielectric zones 4, others of the individual layers 15.2, 15 may deviate from the upper layer 15, 15* with respect to the lateral arrangement and formation of the zones 2, 3 and 4. The application of the method according to the invention for the production of the multi-layer structure 1 results in numerous design variants from which the skilled person can select according to the specific application.

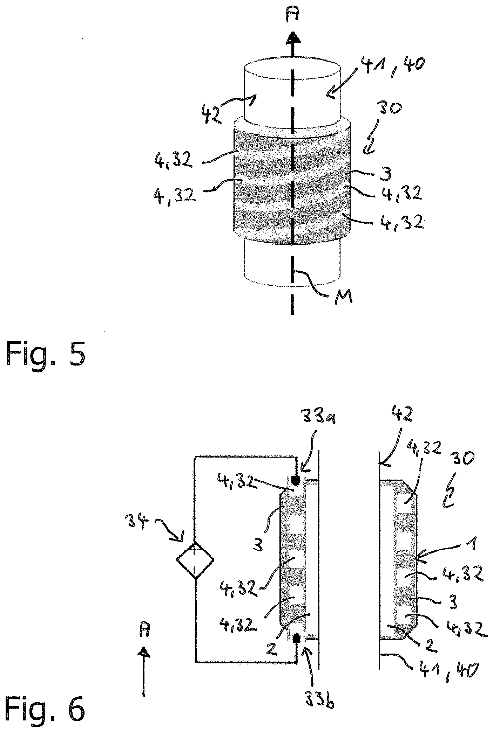

Figures 5 and 6 show a further application example of a monolithic heating device 30 according to the invention, which in the example of Figures 5 and 6 serves to cool a cooling line 40 comprising a tubular body 41 and through which a cooling fluid can flow. Figure 5 shows a perspective view, Figure 6 a longitudinal section. The tubular body 41 has the geometry of a hollow cylinder with central longitudinal axis M extending along an axial direction A. On an outer circumference 42 of the tubular body 41 is arranged a multilayer structure 1 according to the invention with a likewise cylindrical geometric shape. In an analogous manner to the example of Figures 4 and 5, an electrical conduction path 32 is also formed here by a resistive zone 4, which extends helically in the multilayer structure 1 around the tubular body 41 and thus forms a helix. The two path ends 33a, 33b are also electrically connected to an electrical voltage source 34 in this example. The resistive zone 4 is completely surrounded by a dielectric zone 3 for electrical insulation. Adjacent to the dielectric zone, radially inwardly, is an electrically conductive zone 2 with which the multilayer structure 1 rests on the outer circumference 42 of the tubular body 41. By means of the electrically conductive zone 2, good thermal contact of the zone 4 or the conductive path 32 with the tubular body 41 is ensured.

## Claims

1. Method for producing a multilayer structure (1), preferably a single-piece multi-layer structure (1), from a metal powder (10) by means of powder bed-based melting,
- according to which the multilayer structure (1) is produced from the metal powder (10) by means of powder bed-based melting,
- wherein during the powder bed-based melting at least one production or/and process parameter influencing the melting process is varied in such a way that in the multilayer structure (1) produced the metal powder (10) comprises at least one electrically conductive conduction zone (2) of at least one metal and furthermore at least one dielectric zone (3) of at least one metal oxide and furthermore at least one resistive zone,
- wherein the variation of the at least one manufacturing or the at least one process parameter is also carried out in such a way that the resulting resistive zone (4) formed has at least one subzone which it is formed by a mixture of the metal and the metal oxide or/and the at least one resistive zone (4) formed has at least two, preferably more, metallic subzones (4a) of the metal and at least two, preferably several, metal oxide subzones (4b), wherein the at least two metal subzones (4a) and the at least two metal oxide subzones (4b) are arranged alternately adjacent to one another.

2. Method according to claim 1,
**characterized in that**
- the resistivity (ρ) of at least one resistive zone (4) is greater than the resistivity (ρ) of at least one electrically conductive conduction zone (2) and is less than the resistivity (ρ) of at least one dielectric zone (3); or/and **in that**
- the value of the resistance (R) of at least one resistive zone (4) is between 10 mΩ and 1kΩ, preferably between 1 Ω and 100 Ω.

3. Method according to claim 1 or 2,
**characterized in that**
the multilayer structure (1) is produced by successive melting and solidification of a plurality of successively arranged individual layers (15),
wherein the at least one process or manufacturing parameter is varied during the melting of at least one individual layer (15), preferably of a plurality of individual layers (15).

4. Method according to any one of claims 1 to 3,
**characterized in that**
- the multilayer structure (1) is produced from a metal powder (10) in the course of the powder bed-based melting, wherein a light beam (11), in particular of laser light, or an electric beam is scanned along a scan path (12) over a surface (13) of the metal powder (10) in the course of the powder bed-based melting,
- to produce the at least one conductive zone (2), the at least one dielectric zone (3) and the at least one resistive zone (4), at least one of the following production parameters is varied during production or during powder bed-based melting, respectively:
- the radiation intensity of the light or electron beam;
- the speed with which the light or electron beam is guided over the surface;
- a material thickness which the metal powder (10) of a respective single layer (15) has before melting.

5. Method according to one of the preceding claims,
**characterized in that**
for producing the at least one resistive zone (4), at least one production or/and process parameter is set or/and varied in such a way that the metal powder (10) is partially oxidized in the region of the resistive zone (4) to be produced.

6. Method according to one of the preceding claims,
**characterized in that**
for generating the at least one resistive zone (4), an energy density of the light beam or electron beam is set or/and varied during the movement over the metal powder (10) in such a way that the metal powder (10) is partially oxidized in the region of the resistive zone (4) to be generated.

7. Method according to one of the preceding claims,
**characterized in that**
for partial oxidation, at least one manufacturing or process parameter influencing the melting is set in such a way that a value of the energy deposition density occurring in the metal powder (10) lies between a lower limit value, which is required in order to melt the metal powder (10) without oxidizing it, and an upper limit value, which is required in order to oxidize the metal powder (10).

8. A, preferably single-piece, multilayer structure (1) for a monolithic heater (20), preferably produced by the method according to any one of the preceding claims, comprising at least one electrically conductive zone (2) of at least one metal and further comprising and at least one dielectric zone (3) of at least one metal oxide and further comprising at least one resistive zone (4) in which metal is partially oxidized.

9. Multilayer structure according to claim 8,
**characterized in that**
the partially oxidized resistive zone (4) comprises or consists of a mixture of metal and metal oxide.

10. Multilayer structure according to claim 8 or 9,
**characterized in that**
the partially oxidized resistive zone comprises at least two, preferably several,
metallic subzones (4a) of the metal and at least two, preferably several, metal-oxide subzones (4b) of the metal oxide, the at least two metallic subzones (4a) and the at least two metallic subzones (4b) being arranged alternately next to one another in succession.

11. Multilayer structure according to any one of claims 8 to 10,
**characterized in that**
- the multilayer structure (1) comprises at least two individual layers (15a) arranged one on top of the other and firmly connected to one another;
- at least one of the at least one electrically conductive zone (2) or and at least one of the at least one dielectric zone (3) or/and at least one of the at least one resistive zone extends over exactly one individual layer (15a) or over at least two individual layers (15a) arranged next to one another.

12. Multilayer structure according to any one of claims 8 to 11,
**characterized in that**
at least one metallic subzone (4a) or/and at least one metal-oxide subzone (4b) have a cross-sectional area between 1 µm² and 1 cm² in a specific cross-section.

13. Multilayer structure according to any one of claims 8 to 12,
**characterized in that**
at least one resistive zone comprises at least two metal subzones (4a) or and at least two metal oxide subzones (4b).

14. Multilayer structure according to any one of claims 8 to 13,
**characterized in that**
at least one resistive zone (4) is formed in a cluster-like manner with a plurality of, preferably alternately, metallic and metal-oxide subzones (4a, 4b) arranged next to one another.

15. Multilayer structure according to any one of claims 8 to 14,
**characterized in that**
at least one resistive zone (4) has at least two metallic subzones (4a) which are spatially electrically separated from one another by means of at least one metal-oxide subzone (4b).

16. Multilayer structure according to any one of claims 8 to 15,
**characterized in that**
at least two metallic subzones (4a) and the at least two metal-oxide subzones (4b) are each formed in a layer-like manner and are preferably stacked alternately, particularly preferably along a stacking direction (SR).

17. Multilayer structure according to one of claims 8 to 16,
**characterized in that**
- the specific electrical resistance of the multilayer structure (1) in the at least one resistive zone (4) is greater than in the at least one electrically conductive conduction zone (2) and is smaller than in the at least one dielectric zone (3); or/and **in that**
- the resistivity of the multilayer structure (1) in the at least one resistive zone (4) is between X1 and X2, preferably between Y1 and Y2m.

18. Monolithic heater (30), in particular electric thick-film heater (31), comprising a multilayer structure (1) according to any one of claims 8 to 17, preferably produced by means of the method according to any one of claims 1 to 7.
